# EUROPEAN PATENT SPECIFICATION

(11) **EP 2 780 684 B1**
(45) Date of publication and mention of the grant of the patent: **01.05.2019**
(21) Application number: 12849029.9
(22) Date of filing: 13.11.2012
(51) Int. Cl.: G01M 15/10, F01N 3/021, F01N 11/00, F02D 41/14

(54) **METHOD AND SYSTEM FOR DIAGNOSIS OF A COMBUSTION ENGINE**
VERFAHREN UND SYSTEM ZUR DIAGNOSE DES ZUSTANDS EINES VERBRENNUNGSMOTORS
PROCÉDÉ ET SYSTÈME POUR LE DIAGNOSTIC D'UN MOTEUR À COMBUSTION

(30) Priority: 14.11.2011 SE 1151074
(43) Date of publication of application: 24.09.2014
(73) Proprietor: Scania CV AB, 151 87 Södertälje (SE)
(72) Inventor: STENLÅÅS, Ola, S-151 48 Södertälje (SE)
(74) Representative: Scania CV AB
(86) International application number: PCT/SE2012/051241
(87) International publication number: WO 2013/074023

(56) References cited:
- US-A- 6 055 810
- US-A- 6 055 810
- US-A1- 2007 033 925
- US-A1- 2007 137 177
- US-A1- 2007 137 177
- US-A1- 2008 307 770
- US-A1- 2008 307 770
- US-A1- 2008 307 772
- US-A1- 2008 307 772

## Description

### Field of the invention

The present invention relates to a combustion engine system and in particular to a method for diagnosis of a combustion engine according to the preamble of claim 1. The invention relates also to a system and a vehicle, and to a computer programme and a computer programme product, which implement the method according to the invention.

### Background to the invention

Growing official concern about pollution and air quality, especially in major urban areas, has led to the adoption of emission standards and requirements in many jurisdictions.

Such emission standards often set requirements which define acceptable limits for exhaust emissions from vehicles equipped with combustion engines. These standards often regulate, for example, levels for emissions of nitrogen oxides (NOₓ), hydrocarbons (HC) and carbon monoxide (CO). These emission requirements also usually cover, for at least certain kinds of vehicle, the presence of particles in exhaust emissions.

These regulations are often organised in such a way that increasingly stringent emission level requirements are introduced at intervals of one or a few years. The endeavour to meet these requirements has therefore led to the development of systems for post-treatment (cleaning) of the exhaust gases which are formed during combustion in combustion engines.

These post-treatment systems often comprise some form of catalytic cleaning process whereby one or more catalysts are used to clean the exhaust gases. Such post-treatment systems often comprise other components as alternatives to, or in combination with, the one or more catalysts, e.g. post-treatment systems on vehicles with diesel engines often comprise particle filters.

Soot particles are formed during combustion of fuel in the combustion chambers (e.g. cylinders) of a combustion engine. As above, these soot particles are likewise subject to emission requirements and standards, which may entail using particle filters to intercept the soot particles. In such cases the exhaust flow is for example led through a filter structure whereby soot particles are captured from the passing exhaust flow in order to be stored in the particle filter.

There are various methods for reducing emissions from a combustion engine. As well as requirements concerning emission levels, it is also becoming increasingly common for there to be statutory requirements for vehicles to have internal diagnostic systems, so-called OBD (on-board diagnostics) systems to ensure that not only at for example the time of visits to workshops but also in day-to-day operation vehicles actually meet established requirements concerning emissions. In the case of particle emissions this may for example be achieved by means of a particle sensor, referred to in the description and claims set out below as a PM (particulate matter, particulate mass) sensor, situated in the tailpipe of the exhaust system to measure the particle content of the exhaust flow before it is released into the vehicle's surroundings.

Post-treatment systems with particle filters can be very effective and the resulting particle content after the exhaust flow has passed through the vehicle's post-treatment system is often low when the system is fully functional. This also means that the signals which the sensor delivers will indicate low or no particle emission.

US 2007/0033925 A1 relates to a method for monitoring an exhaust gas limiting value of an internal combustion engine using exhaust gas sensors, e.g. sensors for detecting soot particles.

US 2007/0137177 A1 relates to a system for on-board diagnostics for anomalous cylinder behaviour, said system comprising sensors for measuring particulate matter.

US 6055810 relates to feedback control of direct injected engines by use of a smoke sensor.

US 2008/0307770 A1 relates to an approach for controlling particulate matter in an engine.

US 2008/0307772 A1 relates to an exhaust purification device for an internal combustion engine, disclosing that a smoke sensor may be provided in the passage between the exhaust side of the internal combustion engine and a Diesel Particulate Filter (DPF).

### Summary of the invention

An object of the invention is to propose a method for diagnosis of a combustion engine pertaining to a vehicle. This object is achieved with a method according to claim 1.

The present invention proposes a method for diagnosis of a combustion engine whereby a post-treatment system comprising at least one particle filter is provided to post-treat an exhaust flow arising from combustion in said engine, which method comprises
- using a PM sensor situated upstream of said particle filter to determine, at a location upstream of said particle filter, a first particle content in said exhaust flow arising from said engine,
- using said first particle content determined to determine whether said engine is malfunctioning,
and, when it is determined that said combustion engine (101) is malfunctioning:
- determining the cause of said engine malfunctioning by actively influencing the fuel supply and/or the air supply to said engine, said cause of the engine malfunctioning being determined on the basis of the effect upon said first particle content of said active influencing of the fuel supply and/or the air supply.

Determining a particle content at a location upstream of said particle filter and then using this particle content as a basis for determining whether the engine, e.g. a combustion engine pertaining to a vehicle, is malfunctioning makes it possible to detect malfunctions at a very early stage and to take appropriate forms of remedial action. It is thus possible to detect faults which otherwise might perhaps only be detected at a substantially later time, e.g. on the occasion of a workshop visit.

The fault may be of such a kind that a vehicle's particle emissions, despite a raised content due to malfunctioning of its engine, may continue to meet applicable legal requirements as above, since the particle filter may effectively capture the particles. However, the higher particle content will more quickly fill the particle filter, leading to more frequent filter regeneration and consequently greater fuel consumption. Moreover, a malfunctioning engine does itself often cause increased fuel consumption which may continue until the fault is detected, which may, e.g. in the case of a vehicle, take place only when the vehicle visits a workshop/undergoes servicing. Applying the present invention to detect the fault at an early stage makes it possible to ensure that the vehicle can quickly be rectified as necessary.

It may for example be determined that the engine is malfunctioning when said first particle content differs from, e.g. exceeds, a second particle content by more than a first value.

In one embodiment, a plurality of determinations of the particle content of the exhaust flow arising from the engine are made, and said determination of whether said engine is malfunctioning is based on said plurality of particle content determinations.

Sensor location upstream of the particle filter affords the further advantage that the sensor's actual reliability can be verified in a straightforward way. The higher particle content of the exhaust flow upstream of the particle filter will cause the PM sensor to deliver frequently and more or less regularly a signal indicating the presence of soot/particles in the exhaust flow, which will thus also be easy to diagnose.

Further characteristics of the present invention and advantages thereof are indicated by the detailed description of embodiment examples set out below and the attached drawings.

### Brief description of drawings

- Fig. 1a: depicts schematically a vehicle on which the present invention may be employed.
- Fig. 1b: depicts a control unit in the control system for the vehicle depicted in Fig. 1.
- Fig. 2: depicts the post-treatment system in more detail for the vehicle depicted in Fig. 1.
- Fig. 3: depicts an example of a method according to the present invention.

### Detailed description of embodiments

The expression "particle content" in the description and claims set out below comprises both content in the form of unit weight and content/concentration, i.e. the unit number of particles. Moreover, the unit may be any suitable unit and the content may be expressed as, for example, weight or number of particles per unit volume, per unit time, per work performed or per distance travelled by the vehicle.

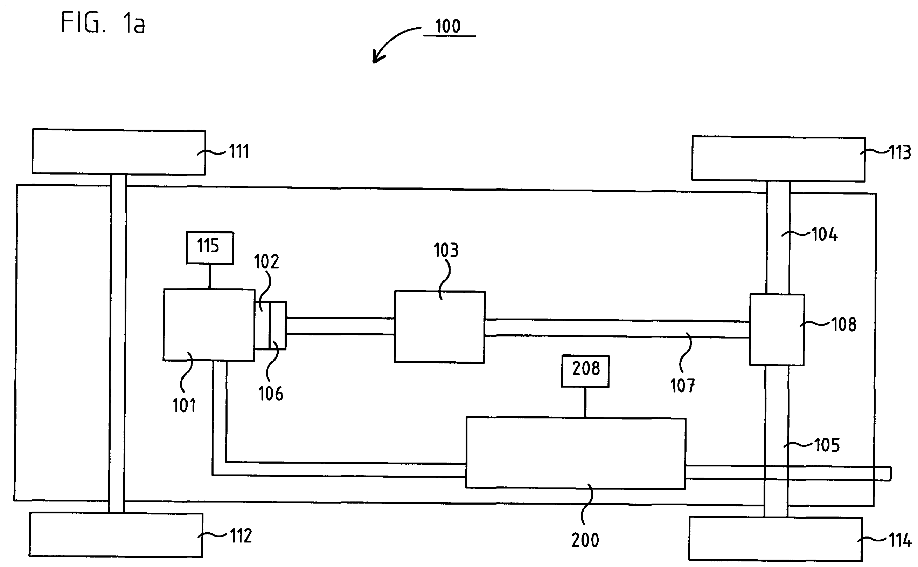

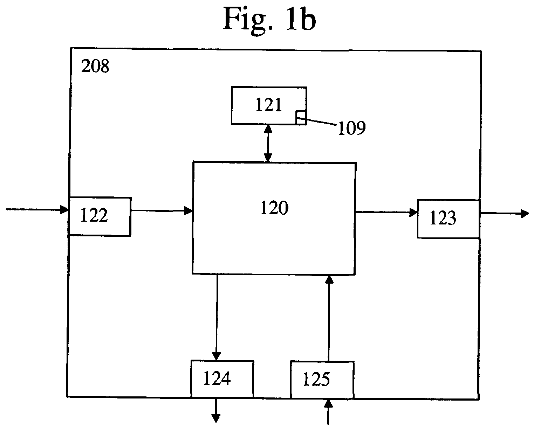

Fig. 1a depicts a power train of a vehicle 100 according to an embodiment of the present invention. The vehicle schematically depicted in Fig. 1 has only one axle provided with tractive wheels 113, 114 but the invention is also applicable on vehicles in which more than one axle is provided with tractive wheels. The power train comprises a combustion engine 101 which is connected in a conventional way, via an output shaft of the engine, usually via a flywheel 102, to a gearbox 103 via a clutch 106. The engine is controlled by the vehicle's control system via a control unit 115. The clutch 106, which may for example take the form of an automatically controlled clutch, and the gearbox 103 are also controlled by the vehicle's control system by means of one or more suitable control units (not depicted). The vehicle's power train may of course also be of some other kind, e.g. a type with conventional automatic gearbox etc.

An output shaft 107 from the gearbox 103 then drives the tractive wheels 113, 114 via a final gear 108, e.g. a conventional differential, and driveshafts 104, 105 which are connected to said final gear 108.

The vehicle 100 further comprises a post-treatment system (exhaust cleaning system) 200 for treatment (cleaning) of exhaust emissions arising from combustion in the engine's combustion chambers (e.g. cylinders).

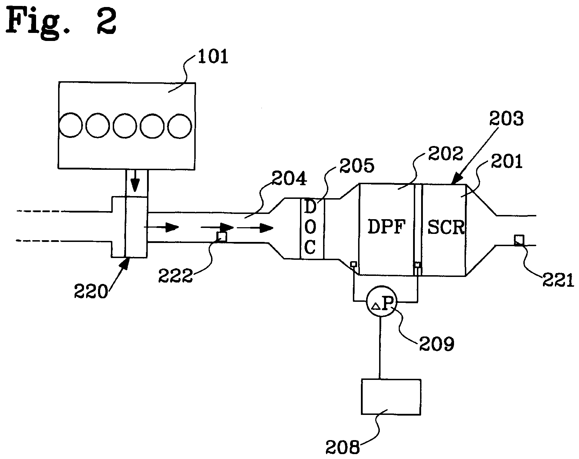

The post-treatment system is depicted in more detail in Fig. 2, showing the vehicle's engine 101 from which the exhaust gases (the exhaust flow) generated by the combustion are led through a turbo unit 220. In turbo engines the exhaust flow arising from the combustion often drives a turbo unit which itself compresses the incoming air for the combustion in the cylinders. Alternatively, the turbo unit may for example be of compound type. The function of various kinds of turbo unit is well-known and is therefore not described in more detail here. The exhaust flow is then led via a pipe 204 (indicated by arrows) to a particle filter (diesel particulate filter, DPF) 202 via an oxidation catalyst (diesel oxidation catalyst, DOC) 205.

The oxidation catalyst DOC 205 has various functions and is normally used primarily to oxidise remaining hydrocarbons and carbon monoxide in the exhaust flow to carbon dioxide and water. The oxidation of hydrocarbons (i.e. oxidation of fuel) results also in the formation of heat which may be utilised to raise the temperature of the particle filter at the time of its emptying, its so-called regeneration. The oxidation catalyst may also be used to oxidise nitrogen monoxide (NO) to nitrogen dioxide (NO₂) which may be utilised in so-called passive regeneration.

Post-treatment systems of the type referred to may also comprise other components, e.g. a (single, in the present example) SCR (selective catalytic reduction) catalyst 201 situated downstream of the particle filter 202. SCR catalysts use ammonia (NH₃), or a compound from which ammonia can be generated/formed, as additive to reduce the amount of nitrogen oxides NOₓ.

Moreover, the post-treatment system 200 may also comprise more components than as exemplified above or, conversely, fewer components. It may for example comprise an ASC (ammonia slip catalyst) (not depicted) in addition to, or instead of, said DOC 205 and/or SCR 201. In the embodiment depicted, DOC 205, DPF 202 and also the SCR catalyst 201 are integrated in a combined exhaust cleaning unit 203, but it should be noted that DOC 205 and DPF 202 need not be integrated in a single exhaust cleaning unit, as they may be arranged in some other way deemed appropriate.

According to the present invention, the post-treatment system 200 comprises a PM sensor 222 situated upstream of DPF 202. This PM sensor, like other sensors associated with the post-treatment system, e.g. a pressure sensor 209, may deliver signals to a control unit 208, or some other suitable control unit, which controls or monitors the function of the post-treatment system. For example, the determination of appropriate times for regeneration of the particle filter may be done by the control unit 208 at least partly on the basis of signals from the pressure sensor 209 which measures the differential pressure across the filter. The fuller the filter becomes, the greater will be the pressure difference across it. The pressure sensor may for example also be used for diagnosis of DPF 202.

According to the present invention, the PM sensor 222 may alternatively or additionally transmit signals to, for example, the engine control unit 115 or some other suitable control unit which uses sensor signals received as a basis for conducting engine diagnosis according to the present invention.

Control systems in modern vehicles generally comprise a communication bus system consisting of one or more communication buses for connecting together a number of electronic control units (ECUs), e.g. the control units or controllers 115, 208, and various components located on the vehicle. Such a control system may comprise a large number of control units and the responsibility for a specific function may be shared by two or more of them.

For the sake of simplicity, only the control units 115, 208 appear in Fig. 1a.

In the embodiment depicted, the present invention is implemented in the control unit 208, which as above is responsible in the embodiment depicted for other functions in the post-treatment system, e.g. regeneration (emptying) of the particle filter 202, although the invention may equally well be implemented in a control unit dedicated to it, or wholly or partly in one or more other control units with which the vehicle is already provided, e.g. the engine control unit 115.

The function according to the present invention of the control unit 208 (or the control unit or units in which the present invention is implemented) will depend not only on signals from the PM sensor 222 but probably also on, for example, information received from, for example, the control unit or units which control engine functions, i.e. in the present example the control unit 115.

Control units of the type depicted are normally adapted to receiving sensor signals from various parts of the vehicle. The control unit 208 may for example receive sensor signals as above and also from the engine control unit 115 and other control units. Such control units are also usually adapted to delivering control signals to various parts and components of the vehicle, e.g. the control unit 208 may for example deliver signals to the engine control unit 115.

The control is often governed by programmed instructions, typically in the form of a computer programme which, when executed in a computer or control unit, causes the computer/control unit to effect desired forms of control action, e.g. method steps according to the present invention.

The computer programme usually forms part of a computer programme product which comprises a digital storage medium 121 (see Fig. 1b) with the computer programme 109 stored on it. Said digital storage medium 121 may for example take the form of any from among ROM (read-only memory), PROM (programmable read-only memory), EPROM (erasable PROM), flash memory, EEPROM (electrically erasable PROM), a hard disc unit etc., and be situated in or in communication with the control unit, in which case the computer programme is executed by the control unit. The vehicle's behaviour in a specific situation may thus be modified by altering the computer programme's instructions.

An example of a control unit (the control unit 208) depicted schematically in Fig. 1b may itself comprise a calculation unit 120 which may for example take the form of any suitable kind of processor or microcomputer, e.g. a circuit for digital signal processing (Digital Signal Processor, DSP), or a circuit with a predetermined specific function (Application Specific Integrated Circuit, ASIC). The calculation unit 120 is connected to a memory unit 121 which provides it with, for example, the stored programme code 109 and/or the stored data which the calculation unit needs for it to be able to perform calculations. The calculation unit is also arranged to store partial or final results of calculations in the memory unit 121.

The control unit is further provided with respective devices 122, 123, 124, 125 for receiving and sending input and output signals. These signals may comprise waveforms, pulses or other attributes which the input signal receiving devices 122, 125 can detect as information for processing by the calculation unit 120. The output signal sending devices 123, 124 are arranged to convert calculation results from the calculation unit 120 to output signals for conveying to other parts of the vehicle's control system and/or the component/components for which the signals are intended. Each of the connections to the respective devices for receiving and sending input and output signals may take the form of one or more from among a cable, a data bus, e.g. a CAN (Controller Area Network) bus, an MOST (Media Oriented Systems Transport) bus or some other bus configuration, or a wireless connection.

As mentioned above, the combustion in the combustion chambers of the engine 101 results in the formation of particles which should not and in many cases are not permitted to be released into the vehicle's surroundings. The particles formed during combustion in, for example, a diesel engine consist largely of hydrocarbons, carbon (soot) and inorganic substances such as sulphur and ash. Soot particles may inter alia be formed when the fuel/air ratio during combustion in the engine's combustion chambers becomes too great, i.e. when there is a so-called "rich" fuel mixture with too high a proportion of fuel relative to that of air, and particles may for example also be formed by oil splash from the engine's lubrication which enters the combustion chamber, or metal fragments from wear and/or manufacture of the engine. A further example is the vehicle's fuel, which may itself be more or less clean.

The soot particles are captured by the particle filter 202 and a very large proportion of those occurring in the exhaust flow can usually be separated. The particle filter thus contributes substantially to compliance with direct requirements concerning emission levels. It is becoming increasingly common for there to be statutory requirements for vehicles to have their own systems, so-called OBD (on-board diagnostics) systems, making it possible to ensure that not only on the occasion for example of workshop visit checks but also in commercial operation the vehicle's particle emissions stay below prescribed levels.

This may be achieved in a relatively straightforward way by providing a particle sensor (PM sensor) associated with the tailpipe of the post-treatment system, i.e. substantially at the location where the exhaust flow is released into the vehicle's surroundings (indicated by ref. 221 in Fig. 2). By monitoring signals from the sensor 221, e.g. by means of a control unit corresponding to the control unit 208, it is possible to ensure that the particle content of the exhaust flow leaving the vehicle will also be below prescribed levels.

However, the sensor location described entails disadvantages which are described in detail in the parallel Swedish patent application entitled **"METHOD AND SYSTEM PERTAINING TO EXHAUST CLEANING" ("FORFARANDE OCH SYSTEM VID AVGASRENING",** application no. 1151073-2), with the same inventor, filing date and applicant as the present application. Said parallel application further describes how such problems can be reduced or completely eliminated by locating the PM sensor upstream of the particle filter, as in the case of the sensor 222 depicted in Fig. 2, instead of downstream. The method described in said application makes it possible to determine whether the vehicle's emissions after the particle filter are below prescribed levels.

The present invention does however use a PM sensor location upstream of a particle filter, e.g. the sensor 222, not primarily to verify that emission requirements are complied with, but to diagnose the engine in order to be able to detect whether it is malfunctioning, and using the PM sensor makes such determination possible substantially earlier than has previously been the case, and especially when the vehicle is still in motion rather than only on the occasion of a workshop visit.

Thus according to the present invention the PM sensor 222 need not necessarily be used for determining whether the vehicle's emissions after the particle filter are below prescribed levels, although simultaneous use both according to the present invention and according to said application entitled **"METHOD AND SYSTEM PERTAINING TO EXHAUST CLEANING" ("FÖRFARANDE OCH SYSTEM VID AVGASRENING")** may of course be advantageous.

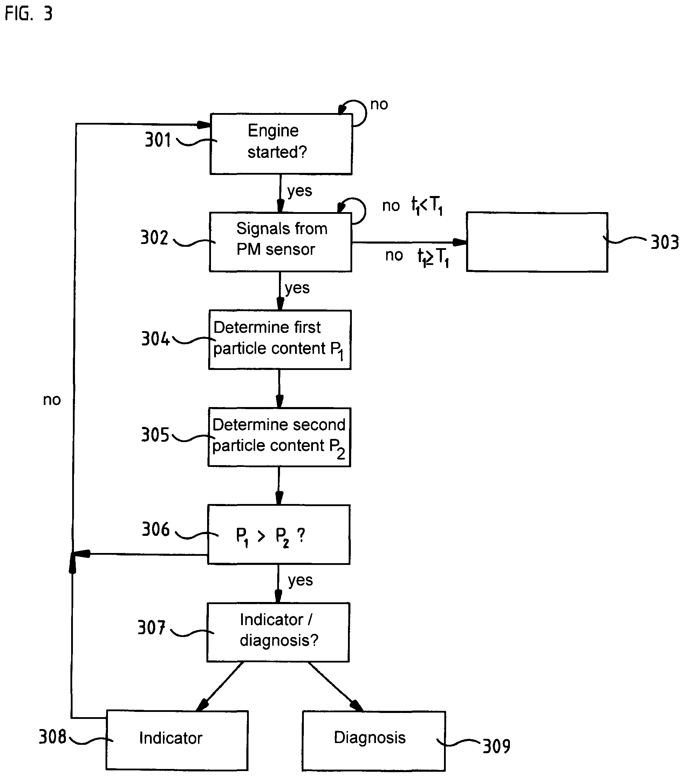

A method 300 according to the present invention for detecting malfunction of the vehicle's engine is illustrated in Fig. 3. In the embodiment depicted the method is implemented in the control unit 208 but might equally well be implemented in some other suitable control unit. It begins at step 301 by determining whether the vehicle's engine 101 has been started. If it has, the method moves on the step 302, otherwise it stays at step 301 or ends.

Step 302 determines whether signals are being received from the PM sensor 202. The method stays at step 202 until sensor signals are received but not beyond the time when a timer t₁ reaches a time T₁. If no sensor signals are received before the counter reaches T₁, which may for example be part of a second or a suitable number of seconds, the method can move on to a step 303 for diagnosis of the sensor, see below. If, on the contrary, sensor signals are received within time T₁, the method moves on to step 304 for determination of a particle content of the exhaust flow.

Step 304 determines a first particle content P₁ on the basis of the signals delivered by the PM sensor 222. As the determination is by means of a PM sensor situated upstream of the particle filter 202, a continuous flow of particles will be continually passing the sensor when the engine is in operation, and the measurements provided by the sensor according to the present invention will result in the delivery of a substantially continuous signal which is representative of the actually prevailing conditions as compared for example with measurements downstream of a particle filter which itself acts like a buffer so that actual emissions after the filter will at least partly depend on its fullness etc.

PM sensor location according to the present invention thus makes it possible for changes in the exhaust flow's particle content to be determined quickly and with great accuracy in that the sensor will also certainly deliver a signal, since the smallest amount of particles required for it to indicate their presence will assuredly be reached. The larger amount of particles compared with measurement after a particle filter also makes both size determination and diagnosis easier.

As well as the PM sensor 222 being situated in an environment where the exhaust flow has a higher particle content, its location upstream of the particle filter affords the further advantage of allowing it to be in a well-mixed and homogenous exhaust flow, thus ensuring that measurements are made in a representative part of the exhaust flow. In the embodiment depicted, the PM sensor is situated upstream of both DPF 202 and DOC 205, but as exemplified below it might be at any of a number of different locations (but always upstream of the particle filter 202).

When a first particle content P₁ has been determined at step 304 on the basis of the signals delivered by the PM sensor, the method moves on to step 305 in which a second particle content P₂ is determined before being compared at step 306 with said first particle content P₁ as below.

Said second particle content P₂ is an expected particle content in prevailing conditions and may for example be a calculated or previously measured content for prevailing conditions. In other words, the second particle content P₂ is an expected particle content in the conditions prevailing at the time with regard for example to engine speed, injection angle, amount of fuel injected, vehicle speed etc.

In cases where said second particle content P₂ is calculated, this may be done by means of a suitable calculation model, possibly using for example different calculation models to represent different operating conditions in order to achieve as good a representation as possible. In cases where the particle content is a previously measured content for prevailing conditions it is for example possible to make a tabular compilation for storing previously measured particle contents at different engine speeds, amounts of fuel injected, vehicle speeds etc. Instead of tabulating previously measured values it is also possible to use values calculated in a suitable theoretical way.

When said second particle content P₂ has been determined, the method moves on to step 306 in which the first and second particle contents are compared. If it is determined that said first particle content P₁ does not exceed said second particle content P₂, the method reverts to step 301 for fresh determination/comparison.

If on the contrary it is determined that said first particle content P₁ exceeds said second particle content P₂, e.g. by more than some suitable value and/or according to any of the criteria mentioned below, a diagnostic method as below is commenced, in which case the method moves on to step 309 for diagnosis.

It may also be advantageous not to base determination on a single value but to determine that the engine is malfunctioning if said first particle content P₁ exceeds said second particle content P₂ over a certain number of consecutive determinations, or at least over a first subset of an amount of determinations, or over a period of time such as 1s, 5s, 10s, 30s, 1 min, 2 min etc. or, for example, any desired number of seconds/minutes within the range 0-60 minutes, or part of a period of time, e.g. x% of, for example, any of said periods of time.

In one embodiment, either alternatively to, or in combination with, the foregoing, said first particle content P₁ is determined and is compared with a respective corresponding second particle content P₂ as above (i.e. a second particle content which corresponds to the conditions at the respective measuring time) at a plurality of times at any suitable interval, e.g. any of the above periods, and said engine will be deemed to be malfunctioning when a combined value for said plurality of times fulfils a first condition, e.g. that the first particle content P₁ exceeds the second particle content P₂ in a certain number of determinations, or that the first particle content P₁ exceeds the second particle content P₂ by a certain level in a certain number of determinations.

In other words, the method illustrated in Fig. 3 may be repeated one or more times *y,* and a counter *x* will be incremented by one each time the method moves to step 307.

The method may for example be repeated after a timer t₂ has counted to a time T₂, e.g. a suitable number of seconds. By this procedure it is possible to determine whether the raised particle content is only temporary before dropping back below a prescribed level. If raised levels persist after a plurality of determinations, e.g. according to the above criteria, the method may move on to step 308 or step 309 as below.

The method may also comprise determining for the first particle content P₁ a variation which may be compared with an expected variation of it. On the basis of the comparison it is possible to determine whether the engine is malfunctioning. The variation may for example be arranged such as to be actively affected by altering operating parameters of the engine to cause expected changes.

The present invention thus affords the advantage that faults which may occur on the vehicle but are normally perhaps not detected for a considerable time or only on the occasion of a workshop visit can be determined substantially earlier and be brought to the driver's attention so that suitable remedial action can be taken.

As well as detecting that the engine is malfunctioning, the present invention is also used to determine actual causes, step 309. This may for example be achieved by particle content comparison for different running situations and/or by altering engine control parameters while at the same time determining their effect upon the particle content of the exhaust flow.

A number of malfunction causes which may result in raised particle content of the exhaust flow are exemplified below, and at least one of them is an example of how the reason for the engine malfunctioning may be determined on the basis of particle content determinations.

The air filter for the combustion air intake may for example be partly obstructed. Similarly, any charge air cooler fitted may be partly obstructed. In such situations the actual amount of air reaching the combustion chamber relative to the desired amount will be less than expected, and the greater the amount of air supposed to reach the combustion chamber, the greater will be the deviation in the actual amount of air, i.e. the more the air which should be supplied for the combustion, the less air relative to the desired amount will actually reach the combustion chamber. This will in its turn result in the particle content of the exhaust flow increasing with increased need for air flow, since an ever smaller proportion of the desired air flow will reach the engine's cylinders, leading to undesirably rich fuel/air mixture.

By particle content comparison according to the present invention for different operating conditions with different air flow requirements it is thus possible to determine whether air filters and/or charge air coolers are obstructed, in which case it is for example possible for a service indicator and/or air filter change indicator to be activated and for the vehicle's driver to be made aware of the need for servicing.

Another possible cause of the particle content becoming undesirably high is when the EGR content, i.e. how much of the exhaust gases arising from the combustion is led back for subsequent combustion, reaches for some reason an undesirably high level. Too high an EGR content results in increased particle content which may for example be due to leakage or to EGR regulating faults. Such faults may for example be determined by actively influencing the EGR regulation while at the same time variations in the particle content are determined.

Another possible cause of malfunction is obstructed nozzle holes, which may for example lead to incorrect fuel dosing and/or incorrect injection patterns. The magnitude of the fault and the resulting particle content in the exhaust flow will vary with the pressure at which injection takes place. Obstructed nozzle holes will cause an increasing error in fuel amount as a function of increased injection pressure. By varying the injection pressure while at the same time monitoring the particle content it is possible to determine whether obstructed nozzle holes are a probable cause of prevailing raised particle contents of the exhaust flow.

If it is determined that obstruction of nozzle holes is likely, remedial action may be taken to try to resolve the obstruction, e.g. by increasing the injection pressure in an attempt to blow the holes clean. Alternatively, or if the remedial action does not achieve the desired effect, an appropriate indicator may be activated to make the driver aware of the probable need for servicing action.

A further possible cause of undesirably high particle contents is faults with regard to injection time/injection angle a, particularly in that too late injection, with late end-of-injection (EOI), may lead to raised particle contents. This fault may be determined by varying the time/the angle α while at the same time the particle content variations are determined as above.

As well as injection time, faults may also occur in amount of fuel injected (delta), which may for example be due to too high an injection pressure and/or too long an injection time. By varying the injection pressure it is possible to determine the influence of the amount of fuel upon the particle content.

It may also be that the injection pressure is itself incorrect. Too high an injection pressure may cause undesirable wall impact or spray collision. Here again, pressure alteration may be employed to determine faults.

A further malfunction cause which may be more difficult to determine is the use of fuel which is not clean or not approved by the vehicle's manufacturer. This may be difficult to distinguish from other causes, but in cases where for example the particle content increases suddenly after a refuelling operation the fuel may be suspected of being the cause, particularly if the particle contents later revert to normal levels after a subsequent refuelling.

A further possible malfunction cause is uneven cylinder balancing, i.e. the engine's cylinders not working equally hard. A particle content which exceeds a desired level as above, or is very uneven and is determined as recurring pulses at half the engine speed (in a four-stroke engine), may indicate uneven cylinder balancing. If the sensor is rapid and is for example situated high up in a manifold, i.e. close to the engine's cylinders, it may even be possible to determine which one or more of the cylinders present deviating values. This fault may be determined by adjusting valve times and/or injection into the cylinder/cylinders suspected of causing high particle content, thereby also potentially achieving better cylinder function.

The present invention thus affords the advantage that various kinds of faults which may occur on a vehicle but are perhaps normally not detected for a considerable time or only on the occasion of a workshop visit can be determined, making it also possible to take suitable remedial action immediately.

Various of the above faults will also cause the vehicle's fuel consumption to be undesirably high, so the present invention affords the further advantage that problems of raised fuel consumption can be determined at an early stage.

In the diagnosis at step 309, the above possible malfunction causes may thus be evaluated, e.g. sequentially and according to any suitable probability ranking, in order to determine whether one or more of the above possibilities may be the actual cause of the engine malfunctioning.

The diagnosis may involve suitable indications in the vehicle's control system to simplify a subsequent workshop visit, leading to shorter service time/reduced service cost.

It is also possible to combine the diagnostic process with simultaneous regulation of prevailing operating parameters so that the vehicle is as far as possible run in the most economic way with regard to a particular aspect, e.g. fuel or emissions. This is described in detail in the parallel Swedish patent application entitled **"METHOD AND SYSTEM FOR REGULATION OF A COMBUSTION ENGINE" ("FÖRFARANDE OCH SYSTEM FOR REGLERING AV EN FÖRBRÄNNINGSMOTOR",** application number 1151075-7), with the same inventor, filing date and applicant as the present application. Said application describes a method whereby a signal delivered by a first sensor serves as a basis for determining whether said engine is malfunctioning, and at least one form of remedial action is taken to rectify the malfunction. A PM sensor situated upstream of a particle filter is then used to determine a particle content of the exhaust flow arising from the engine, and the particle content determined is used to determine whether said first remedial action has reduced the fault detected.

Locating the PM sensor upstream has also further advantages. Since the sensor is so situated that measurement signals will be continually delivered, its function may be verified by observing the signal delivered by it over time. So long as it delivers substantially continuous signals, or delivers for similar operating situations substantially the same signal, the sensor may be regarded as working properly. If on the contrary it suddenly indicates substantially lower emissions than normal for a given running situation, the sensor may be assumed to be malfunctioning, and a service flag may for example be activated in the vehicle's control system to indicate a need for servicing. This also means that active testing of the sensor's function can be undertaken. The engine may for example be intentionally set to operating points which are expected to result in substantially more particle emissions. By simultaneously observing the signals delivered by the sensor it is possible to determine whether they actually reflect the expected increase in the particle content of the exhaust flow. So long as expected changes in the sensor signal take place, the sensor may also be regarded as working properly. If on the contrary the signals do not increase despite increased particle emissions in the running situation, the sensor may be regarded as malfunctioning.

The sensor may for example be of a type which delivers for example a voltage or current or presents a capacitance, inductance or resistance which varies with the presence of particles, in which case the control unit 208 may then use appropriate mathematical relationships or a table to convert measured values received to corresponding particle contents. The sensor may however also be of a type with its own control logic, in which case this internal control logic will calculate a content which is then conveyed to the control unit, e.g. via the vehicle network or a dedicated cable.

As previously mentioned, locating the PM sensor 222 upstream of the particle filter affords also the advantage that it can with greater certainty be so situated as to cause its signals to be representative of the exhaust flow produced by the engine. The sensor may for example be situated, as in Fig. 2, after a turbo unit 220 from which the exhaust flow is usually delivered in a predictable way. It may for example also be situated downstream of DOC 205 but upstream of the particle filter 202. In the embodiment depicted, the SCR catalyst 203 is downstream of the particle filter, but in one embodiment it is instead upstream of DPF 202, in which case the sensor may be downstream or upstream of the catalyst. The vehicle may also be equipped with a so-called exhaust brake which the sensor 222 may for example be upstream of. It may also be situated in the EGR feedback of part of the exhaust flow as is commonly the case in vehicles of the above kind, since this part of the exhaust flow is representative of the composition of the total exhaust flow. The sensor 222 may for example also be situated upstream of the turbo unit 220. The turbo unit may be of the type with fixed geometry (FGT) or of the type with variable geometry (VGT) and be provided with turbines to feed power back to crankshafts (turbo compound) or to some other part of the power train. The vehicle may also be provided with a so-called ammonia slip catalyst (ASC) which the PM sensor may be upstream or downstream of. There are thus a large number of possible locations for the PM sensor upstream of the particle filter.

Vehicles of the kind referred to above are often also provided with communication with, for example, a transport management system for the vehicle fleet to which they belong, such as Scania's "Scania Fleet Management", e.g. via suitable telecommunication systems. In addition or alternatively to activation of an indicator as above, the vehicle (the control system) may be arranged to send data to the transport management system about malfunctions determined, which data can then be used to take appropriate remedial action, e.g. to call the vehicle in to a workshop.

Moreover, the present invention is exemplified above in relation to vehicles. The invention is nevertheless also applicable to any other means of transport/processes in which particle filter systems as above are applicable, e.g. watercraft or aircraft with combustion processes as above.

Further embodiments of the method and system according to the invention are referred to in the attached claims. It should also be noted that the system may be modified according to different embodiments of the method according to the invention (and vice versa) and that the present invention is in no way restricted to the embodiments described above of the method according to the invention, but relates to and comprises all embodiments within the protective scope of the attached independent claims.

## Claims

1. A method for diagnosis of a combustion engine, such that a post-treatment system (200) comprising at least one particle filter (202) is provided to post-treat an exhaust flow arising from combustion in said combustion engine (101), which method comprises
- using a PM sensor (222) situated upstream of said particle filter (202) to determine, at a location upstream of said filter (202), a first particle content (P₁) of said exhaust flow arising from said engine (101), and
- using said first particle content (P₁) determined as a basis for determining whether said engine (101) is malfunctioning,
which method is **characterised by** that it further comprises, when it is determined that said combustion engine (101) is malfunctioning:
- determining the cause of said engine (101) malfunctioning by actively influencing the fuel supply and/or the air supply to said engine, said cause of the engine malfunctioning being determined on the basis of the effect upon said first particle content (P₁) of said active influencing of the fuel supply and/or the air supply.

2. A method according to claim 1, further comprising
- determining that said combustion engine (101) is malfunctioning when said first particle content (P₁) differs from a second particle content (P₂).

3. A method according to claim 2, further comprising
- determining that said combustion engine (101) is malfunctioning when said first particle content (P₁) differs from a second particle content (P₂) by more than a first value.

4. A method according to claim 2 or 3, further comprising
- determining that said combustion engine (101) is malfunctioning when said first particle content (P₁) exceeds a second particle content (P₂) by more than a first value in a first number of determinations.

5. A method according to claim 4, in which said first number of determinations take the form of at least one from among
- a first number of consecutive determinations,
- at least a first number of a second number of determinations which is larger than said first number,
- a first number of determinations over a first period of time,
- a first number of determinations over at least a first part of a period of time,
- a first number of determinations with at least a second period of time between them.

6. A method according to any one of the foregoing claims, which, when it is determined that said combustion engine (101) is malfunctioning, further comprises
- determining the cause of said engine (101) malfunctioning by comparing said first particle content (P₁) with a second particle content (P₂).

7. A method according to claim 6, which, when it is determined that said combustion engine (101) is malfunctioning, further comprises
- determining the cause of said engine (101) malfunctioning by comparing said first particle content (P₁) with a second particle content (P₂) in a plurality of operating conditions of said engine (101).

8. A method according to any one of claims 2-7, in which said second particle content (P₂) is determined on the basis of prevailing operating conditions of said combustion engine.

9. A method according to any one of claims 2-8, in which said first particle content (P₁) and second particle content (P₂) are each determined as one from among
- a particle number or particle weight per unit volume,
- a particle number or particle weight per unit time,
- a particle number or particle weight per work performed.

10. A method according to any one of the foregoing claims, in which said first particle content (P₁) is determined at a plurality of times with a first interval and is compared with a corresponding second particle content (P₂) at each of said times, and
- said combustion engine is determined as malfunctioning when a combined value of the particle filter determinations at said plurality of times fulfils a first condition.

11. A method according to any one of the foregoing claims, further comprising a plurality of determinations of said first particle content (P₁) of said exhaust flow arising from said combustion engine (101), said determination of whether said engine is malfunctioning being based on said plurality of particle content determinations.

12. A method according to any one of the foregoing claims in cases where said combustion engine is situated in a vehicle, which method, when it is determined that said engine (101) is malfunctioning, further comprises
- activating an indicator to bring it to the attention of the vehicle's driver, and/or a malfunction indicator in the vehicle's control system, that said engine (101) is malfunctioning.

13. A method according to any one of the foregoing claims, further comprising determining a function of said PM sensor, which method further comprises
- influencing the particle content delivered by said combustion engine by controlling the fuel supply and/or the air supply for said combustion, and
- determining whether the signal delivered by said PM sensor corresponds to an expected sensor signal.

14. A method according to claim 13, comprising generating a signal which indicates a malfunction of said PM sensor when the signal delivered by it differs from an expected sensor signal.

15. A method according to any one of the foregoing claims, further comprising determining a variation of said first particle content (P₁), and
- comparing said variation with an expected variation of said first particle content (P₁), and
- using said comparison as a basis for determining whether said combustion engine (101) is malfunctioning.

16. A method according to any one of the foregoing claims, in which said first particle content (P₁) is determined as a combined value over a certain time or a combined value from a first number of particle content determinations.

17. A computer programme which comprises programme code and which, when said programme code is executed in a computer, causes said computer to apply the method according to any one of claims 1-16.

18. A computer programme product comprising a computer-readable medium and a computer programme according to claim 17, which programme is contained in said computer-readable medium.

19. A system for diagnosis of a combustion engine (101), such that a post-treatment system (200) comprising at least one particle filter (202) is provided to post-treat an exhaust flow arising from combustion in said engine (101), said system comprising
- a PM sensor (222) situated at a location upstream of said particle filter (202) for determining a first particle content (P₁) of said exhaust flow arising from said engine (101), and
- means for using a first particle content (P₁) determined by said PM sensor (222) as a basis for determining whether said engine (101) is malfunctioning,
said system being **characterised by** that it further comprises:
- means for determining the cause of said engine (101) malfunctioning by actively influencing the fuel supply and/or the air supply to said engine, said cause of the engine malfunctioning being determined on the basis of the effect upon said first particle content (P₁) of said active influencing of the fuel supply and/or the air supply.

20. A vehicle (100), **characterised by** being provided with a system according to claim 19.

## Patentansprüche

1. Verfahren zur Diagnose eines Verbrennungsmotors derart, dass ein Nachbehandlungssystem (200), das zumindest einen Partikelfilter (202) umfasst, bereitgestellt wird, um einen Abgasfluss nachzubehandeln, der von einer Verbrennung in dem Verbrennungsmotor (101) herrührt, wobei das Verfahren umfasst:
- Verwenden eines PM-Sensors (222), der zuströmseitig des Partikelfilters (202) angeordnet ist, um an einem Ort zuströmseitig des Filters (202) einen ersten Partikelgehalt (P1) des Abgasflusses zu bestimmen, der von dem Motor (101) herrührt, und
- Verwenden des bestimmten ersten Partikelgehalts (P1) als Grundlage zum Bestimmen, ob der Motor (101) eine Fehlfunktion aufweist,
wobei das Verfahren **dadurch gekennzeichnet ist, dass** es, wenn bestimmt wird, dass der Verbrennungsmotor (101) eine Fehlfunktion aufweist, ferner umfasst:
- Bestimmen der Ursache dafür, dass der Motor (101) eine Fehlfunktion aufweist, durch aktives Beeinflussen der Kraftstoffzufuhr und/oder der Luftzufuhr zu dem Motor, wobei die Ursache dafür, dass der Motor eine Fehlfunktion aufweist, auf der Grundlage der Auswirkung des aktiven Beeinflussens der Kraftstoffzufuhr und/oder der Luftzufuhr auf den ersten Partikelgehalt (P1) bestimmt wird.

2. Verfahren gemäß Anspruch 1, ferner umfassend:
- Bestimmen, dass der Verbrennungsmotor (101) eine Fehlfunktion aufweist, wenn der erste Partikelgehalt (P1) sich von einem zweiten Partikelgehalt (P2) unterscheidet.

3. Verfahren gemäß Anspruch 2, ferner umfassend:
- Bestimmen, dass der Verbrennungsmotor (101) eine Fehlfunktion aufweist, wenn der erste Partikelgehalt (P1) sich von einem zweiten Partikelgehalt (P2) um mehr als einen ersten Wert unterscheidet.

4. Verfahren gemäß Anspruch 2 oder 3, ferner umfassend:
- Bestimmen, dass der Verbrennungsmotor (101) eine Fehlfunktion aufweist, wenn der erste Partikelgehalt (P1) einen zweiten Partikelgehalt (P2) um mehr als einen ersten Wert in einer ersten Anzahl von Bestimmungen überschreitet.

5. Verfahren gemäß Anspruch 4, bei dem die erste Anzahl von Bestimmungen die Gestalt zumindest eines der folgenden annimmt:
- eine erste Anzahl von aufeinanderfolgenden Bestimmungen,
- zumindest eine erste Anzahl von einer zweiten Anzahl von Bestimmungen, die größer ist als die erste Anzahl,
- eine erste Anzahl von Bestimmungen über einen ersten Zeitraum,
- eine erste Anzahl von Bestimmungen über zumindest einen ersten Teil eines Zeitraums,
- eine erste Anzahl von Bestimmungen mit zumindest einem zweiten Zeitraum zwischen ihnen.

6. Verfahren gemäß einem der vorhergehenden Ansprüche, das, wenn bestimmt wird, dass der Verbrennungsmotor (101) eine Fehlfunktion aufweist, ferner umfasst:
- Bestimmen der Ursache dafür, dass der Motor (101) eine Fehlfunktion aufweist, durch Vergleichen des ersten Partikelgehalts (P1) mit einem zweiten Partikelgehalt (P2).

7. Verfahren gemäß Anspruch 6, das, wenn bestimmt wird, dass der Verbrennungsmotor (101) eine Fehlfunktion aufweist, ferner umfasst:
- Bestimmen der Ursache dafür, dass der Motor (101) eine Fehlfunktion aufweist, durch Vergleichen des ersten Partikelgehalts (P1) mit einem zweiten Partikelgehalt (P2) bei mehreren Betriebsbedingungen des Motors (101).

8. Verfahren gemäß einem der Ansprüche 2 bis 7, bei dem der zweite Partikelgehalt (P2) auf der Grundlage von vorherrschenden Betriebsbedingungen des Verbrennungsmotors bestimmt wird.

9. Verfahren gemäß einem der Ansprüche 2 bis 8, bei dem der erste Partikelgehalt (P1) und der zweite Partikelgehalt (P2) jeweils als eines der folgenden bestimmt werden:
- eine Partikelanzahl oder ein Partikelgewicht pro Volumeneinheit,
- eine Partikelanzahl oder ein Partikelgewicht pro Zeiteinheit,
- eine Partikelanzahl oder ein Partikelgewicht pro geleisteter Arbeit.

10. Verfahren gemäß einem der vorhergehenden Ansprüche, bei dem der erste Partikelgehalt (P1) zu mehreren Zeiten mit einem ersten Intervall bestimmt und mit einem entsprechenden zweiten Partikelgehalt (P2) zu jeder der Zeiten verglichen wird, und bei dem
- bestimmt wird, dass der Verbrennungsmotor eine Fehlfunktion aufweist, wenn ein kombinierter Wert der Partikelfilter-Bestimmungen zu den mehreren Zeiten eine erste Bedingung erfüllt.

11. Verfahren gemäß einem der vorhergehenden Ansprüche, ferner umfassend mehrere Bestimmungen des ersten Partikelgehalts (P1) des Abgasflusses, der von dem Verbrennungsmotor (101) herrührt, wobei die Bestimmung, ob der Motor eine Fehlfunktion aufweist, auf den mehreren Partikelgehalt-Bestimmungen basiert.

12. Verfahren gemäß einem der vorhergehenden Ansprüche in Fällen, in denen der Verbrennungsmotor in einem Fahrzeug angeordnet ist, wobei das Verfahren, wenn bestimmt wird, dass der Motor (101) eine Fehlfunktion aufweist, ferner umfasst:
- Aktivieren eines Indikators, um den Fahrer des Fahrzeugs darauf aufmerksam zu machen, dass der Motor (101) eine Fehlfunktion aufweist, und/oder eines Fehlfunktions-Indikator in dem Steuersystem des Fahrzeugs.

13. Verfahren gemäß einem der vorhergehenden Ansprüche, ferner umfassend ein Bestimmen einer Funktion des PM-Sensors, wobei das Verfahren ferner umfasst:
- Beeinflussen des Partikelgehalts, der von dem Verbrennungsmotor geliefert wird, durch Steuern der Kraftstoffzufuhr und/oder der Luftzufuhr für die Verbrennung, und
- Bestimmen, ob das Signal, das von dem PM-Sensor ausgegeben wird, einem erwarteten Sensorsignal entspricht.

14. Verfahren gemäß Anspruch 13, umfassend ein Erzeugen eines Signals, das eine Fehlfunktion des PM-Sensors anzeigt, wenn das von ihm ausgegebene Signal von einem erwarteten Sensorsignal abweicht.

15. Verfahren gemäß einem der vorhergehenden Ansprüche, ferner umfassend ein Bestimmen einer Schwankung des ersten Partikelgehalts (P1) und
- Vergleichen der Schwankung mit einer erwarteten Schwankung des ersten Partikelgehalts (P1) und
- Verwenden des Vergleichs als Grundlage zum Bestimmen, ob der Verbrennungsmotor (101) eine Fehlfunktion aufweist.

16. Verfahren gemäß einem der vorhergehenden Ansprüche, bei dem der erste Partikelgehalt (P1) als ein kombinierter Wert über eine bestimmte Zeit oder als ein kombinierter Wert einer ersten Anzahl von Partikelgehalt-Bestimmungen bestimmt wird.

17. Computerprogramm, das Programmcode umfasst und das, wenn der Programmcode in einem Computer ausgeführt wird, den Computer dazu veranlasst, das Verfahren gemäß einem der Ansprüche 1 bis 16 anzuwenden.

18. Computerprogrammprodukt umfassend ein computerlesbares Medium und ein Computerprogramm gemäß Anspruch 17, wobei das Programm in dem computerlesbaren Medium enthalten ist.

19. System zur Diagnose eines Verbrennungsmotors (101) derart, dass ein Nachbehandlungssystem (200), das zumindest einen Partikelfilter (202) umfasst, bereitgestellt wird, um einen Abgasfluss nachzubehandeln, der von einer Verbrennung in dem Verbrennungsmotor (101) herrührt, wobei das System umfasst:
- einen PM-Sensor (222), der zuströmseitig des Partikelfilters (202) angeordnet ist, um an einem Ort zuströmseitig des Filters (202) einen ersten Partikelgehalt (P1) des Abgasflusses zu bestimmen, der von dem Motor (101) herrührt, und
- Mittel zum Verwenden des bestimmten ersten Partikelgehalts (P1) als Grundlage zum Bestimmen, ob der Motor (101) eine Fehlfunktion aufweist,
wobei das System **dadurch gekennzeichnet ist, dass** es ferner umfasst:
- Mittel zum Bestimmen der Ursache dafür, dass der Motor (101) eine Fehlfunktion aufweist, durch aktives Beeinflussen der Kraftstoffzufuhr und/oder der Luftzufuhr zu dem Motor, wobei die Ursache dafür, dass der Motor eine Fehlfunktion aufweist, auf der Grundlage der Auswirkung des aktiven Beeinflussens der Kraftstoffzufuhr und/oder der Luftzufuhr auf den ersten Partikelgehalt (P1) bestimmt wird.

20. Fahrzeug (100), **dadurch gekennzeichnet, dass** es mit einem System gemäß Anspruch 19 ausgestattet ist.

## Revendications

1. Procédé pour le diagnostic d'un moteur à combustion, de sorte qu'un système de post-traitement (200) comprenant au moins un filtre à particules (202) est fourni pour réaliser le post-traitement d'un flux d'échappement découlant de la combustion dans ledit moteur à combustion (101), lequel procédé comprend
- l'utilisation d'un capteur de particules (222) situé en amont dudit filtre à particules (202) pour déterminer, à un emplacement en amont dudit filtre (202), une première teneur en particules (P₁) dudit flux d'échappement découlant dudit moteur (101), et
- l'utilisation de ladite première teneur en particules (P₁) déterminée en tant que base pour la détermination si ledit moteur (101) ne fonctionne pas bien,
lequel procédé est **caractérisé en ce qu'**il comprend en outre, lorsqu'il est déterminé que ledit moteur à combustion (101) ne fonctionne pas bien :
- la détermination de la cause dudit dysfonctionnement du moteur (101) en exerçant une influence active sur l'alimentation en combustible et/ou l'apport d'air audit moteur, ladite cause du moteur dysfonctionnement étant déterminée sur la base de l'effet sur ladite première teneur en particules (P₁) de ladite influence active de l'alimentation en combustible et/ou l'apport d'air.

2. Procédé selon la revendication 1, comprenant en outre
- la détermination que ledit moteur à combustion (101) ne fonctionne pas bien lorsque ladite première teneur en particules (P₁) diffère d'une deuxième teneur en particules (P₂).

3. Procédé selon la revendication 2, comprenant en outre
- la détermination que ledit moteur à combustion (101) ne fonctionne pas bien lorsque ladite première teneur en particules (P₁) diffère d'une deuxième teneur en particules (P₂) de plus d'une première valeur.

4. Procédé selon la revendication 2 ou 3, comprenant en outre
- la détermination que ledit moteur à combustion (101) ne fonctionne pas bien lorsque ladite première teneur en particules (P₁) dépasse une deuxième teneur en particules (P₂) de plus d'une première valeur dans une première quantité de déterminations.

5. Procédé selon la revendication 4, dans lequel ladite première quantité de déterminations prend forme d'au moins une parmi
- une première quantité de déterminations consécutives,
- au moins une première quantité d'une deuxième quantité de déterminations qui est supérieure à ladite première quantité,
- une première quantité de déterminations sur une première période de temps,
- une première quantité de déterminations sur au moins une première partie d'une période de temps,
- une première quantité de déterminations avec au moins une deuxième période de temps entre elles.

6. Procédé selon l'une quelconque des revendications précédentes, qui, lorsqu'il est déterminé que ledit moteur à combustion (101) ne fonctionne pas bien, comprend en outre
- la détermination de la cause dudit dysfonctionnement du moteur (101) en comparant ladite première teneur en particules (P₁) à une deuxième teneur en particules (P₂) .

7. Procédé selon la revendication 6, qui, lorsqu'il est déterminé que ledit moteur à combustion (101) ne fonctionne pas bien, comprend en outre
- la détermination de la cause dudit dysfonctionnement du moteur (101) en comparant ladite première teneur en particules (P₁) à une deuxième teneur en particules (P₂) dans une pluralité de conditions de fonctionnement dudit moteur (101).

8. Procédé selon l'une quelconque des revendications 2-7, dans lequel ladite deuxième teneur en particules (P₂) est déterminée sur la base des conditions actuelles de fonctionnement dudit moteur à combustion.

9. Procédé selon l'une quelconque des revendications 2-8, dans lequel ladite première teneur en particules (P₁) et deuxième teneur en particules (P₂) sont chacune déterminées comme une parmi
- un nombre de particules ou un poids de particule par volume unitaire,
- un nombre de particules ou un poids de particule par temps unitaire,
- un nombre de particules ou un poids de particule par travail accompli.

10. Procédé selon l'une quelconque des revendications précédentes, dans lequel ladite première teneur en particules (P₁) est déterminée à une pluralité de fois avec un premier intervalle et est comparée à une deuxième teneur correspondante en particules (P₂) à chacune desdites fois, et
- ledit moteur à combustion est déterminé comme fonctionnant mal lorsqu'une valeur combinée des déterminations de filtre à particules à ladite pluralité de fois remplit une première condition.

11. Procédé selon l'une quelconque des revendications précédentes, comprenant en outre une pluralité de déterminations de ladite première teneur en particules (P₁) dudit flux d'échappement découlant dudit moteur à combustion (101), ladite détermination de savoir si ledit moteur ne fonctionne pas bien se basant sur ladite pluralité de déterminations de la teneur en particules.

12. Procédé selon l'une quelconque des revendications précédentes dans le cas où ledit moteur à combustion est situé dans un véhicule, lequel procédé, lorsqu'il est déterminé que ledit moteur (101) ne fonctionne pas bien, comprend en outre
- l'activation d'un indicateur pour attirer l'attention du conducteur du véhicule, et/ou un indicateur de dysfonctionnement dans le système de commande du véhicule, que ledit moteur (101) ne fonctionne pas bien.

13. Procédé selon l'une quelconque des revendications précédentes, comprenant en outre la détermination d'une fonction dudit capteur de particules, lequel procédé comprend en outre
- l'influence de la teneur en particules libérées par ledit moteur à combustion en contrôlant l'alimentation en combustible et/ou l'apport d'air pour ladite combustion, et
- la détermination si le signal délivré par ledit capteur de particules correspond à un signal de capteur attendu.

14. Procédé selon la revendication 13, comprenant la génération d'un signal qui indique un dysfonctionnement dudit capteur de particules lorsque le signal délivré par celui-ci diffère d'un signal de capteur attendu.

15. Procédé selon l'une quelconque des revendications précédentes, comprenant en outre la détermination d'une variation de ladite première teneur en particules (P₁), et
- la comparaison de ladite variation avec une variation attendue de ladite première teneur en particules (P₁), et
- en utilisant ladite comparaison en tant que base pour la détermination si ledit moteur à combustion (101) ne fonctionne pas bien.

16. Procédé selon l'une quelconque des revendications précédentes, dans lequel ladite première teneur en particules (P₁) est déterminée comme une valeur combinée sur une certaine période ou une valeur combinée provenant d'une première quantité de déterminations de la teneur en particules.

17. Programme informatique qui comprend un code de programme et qui, lorsque ledit code de programme est exécuté dans un ordinateur, amène ce dit ordinateur à mettre en oeuvre le procédé selon l'une quelconque des revendications 1-16.

18. Produit de programme informatique comprenant un support lisible par ordinateur et un programme informatique selon la revendication 17, lequel programme étant compris dans ledit support lisible par ordinateur.

19. Système pour le diagnostic d'un moteur à combustion (101), de sorte qu'un système de post-traitement (200) comprenant au moins un filtre à particules (202) est fourni pour réaliser le post-traitement d'un flux d'échappement découlant de la combustion dans ledit moteur (101), ledit système comprenant
- un capteur de particules (222) situé à un emplacement en amont dudit filtre à particules (202) pour la détermination d'une première teneur en particules (P₁) dudit flux d'échappement découlant dudit moteur (101), et
- des moyens pour utiliser une première teneur en particules (P₁) déterminée par ledit capteur de particules (222) en tant que base pour la détermination si ledit moteur (101) ne fonctionne pas bien, ledit système étant **caractérisé en ce qu'**il comprend en outre :
- des moyens pour la détermination de la cause dudit dysfonctionnement du moteur (101) en exerçant une influence active de l'alimentation en combustible et/ou l'apport d'air audit moteur, ladite cause du moteur dysfonctionnement étant déterminée sur la base de l'effet sur ladite première teneur en particules (P₁) de ladite influence active de l'alimentation en combustible et/ou l'apport d'air.

20. Véhicule (100), **caractérisé** en étant fourni avec un système selon la revendication 19.
